Europäisches Patentamt

European Patent Office

Office européen des brevets

(11) Veröffentlichungsnummer: **0 121 746**
A2

(19)

(12) ## EUROPÄISCHE PATENTANMELDUNG

(21) Anmeldenummer: **84102311.2**

(22) Anmeldetag: **03.03.84**

(51) Int. Cl.³: **A 23 L 1/212**

(30) Priorität: **12.03.83 DE 3308836**

(43) Veröffentlichungstag der Anmeldung: **17.10.84**
**Patentblatt 84/42**

(84) Benannte Vertragsstaaten: **AT BE CH FR GB IT LI LU NL SE**

(71) Anmelder: **FFF Franchi's Fast Food GmbH Produktions- und Vertriebs-KG, Lüner Rennbahn 16, D-2120 Lüneburg (DE)**

(72) Erfinder: **Weiss, Michael, Barderuper Strasse 20a, 2391 Oeversee (DE)**

(74) Vertreter: **Hansmann, Dierk, Dipl.-Ing., Jessenstrasse 4, D-2000 Hamburg 50 (DE)**

(54) Verfahren zur Herstellung einer schnittfesten Nahrungsmittelzubereitung aus Tomaten.

(57) Verfahren zur Herstellung einer schnittfesten Nahrungsmittelzubereitung aus Tomaten, bei welchem zerkleinerte Tomaten unter Zugabe von Wasser, Zucker, eines Stabilisators, eines Säurungsmittels und weiterer Zutaten gemischt und der Vormischung aus Wasser, Zucker und Stabilisator ein hygroskopisches Mittel zugegeben wird. Der gebildeten Suspension werden bei einer konstanten Temperatur von 85 °C die zerkleinerten Tomaten, das Säurungsmittel und weitere Zutaten zugegeben, die dann mit Hilfe einer Wurstmaschine in eine Wursthülle abgefüllt wird.

EP 0 121 746 A2

## Verfahren zur Herstellung einer schnittfesten Nahrungsmittelzubereitung aus Tomaten

Die Erfindung bezieht sich auf ein Verfahren zur Herstellung einer schnittfesten Nahrungsmittelzubereitung aus Tomaten, wobei Tomaten unter Zugabe von Wasser und Zucker, eines Stabilisators, weiterer Zutaten und eines Säuerungsmittels gemischt werden, um den pH-Wert einzustellen. Es geht bei der Erfindung weiterhin darum, einen Stabilisator für eine derartige Nahrungsmittelzubereitung einzusetzen, um sicherzustellen, daß die Nahrungsmittelzubereitung längere Zeit aufbewahrt werden kann und dennoch gebrauchsfähig ist.

Ein derartiges Verfahren ist im Zusammenhang mit der Herstellung von Tomatenketchup bekannt (Richtlinie für Tomatenketchup in: ZFL (Internationale Zeitschrift für Lebensmitteltechnologie und -verfahrenstechnik) Jahrgang 31, 1980, Seite 52). Ketchup jedoch kann nicht wie eine Wurst aufbewahrt und geschnitten werden.

Bei der Zubereitung von Nahrungsmitteln werden ganz besondere Anforderungen im Hinblick auf die Haltbarkeit gestellt. Es geht zum einen darum, daß eine solche Nahrungsmittelzubereitung für längere Zeit aufbewahrt werden kann und zum anderen später ohne Beeinträchtigung des Geschmacks gegessen werden kann. Es geht dabei bei der vorliegenden Erfindung nicht um die Herstellung einer Konserve oder dergleichen, sondern vielmehr um eine Lebensmittelzubereitung in der Form einer Wurst beispielsweise, so daß das aufbereitete Lebensmittel so wie eine Wurst aufbewahrt und auch entsprechend geschnitten werden kann.

Es gibt beispielsweise Lebensmittel, die für Restaurants zubereitet und dort bei Bedarf dem Aufbewahrungsraum entnommen werden, auf die richtige Temperatur gebracht und ausgegeben werden. Beispielsweise könnte man ein Weißbrot mit Margarine bestreichen, mit Schinken oder Wurst belegen und schließlich einige Zwiebel- oder Tomatenscheiben auflegen. Ein derartiges Gericht kann jedoch nicht beliebig lange aufbewahrt werden, weil einerseits von der Zwiebel und andererseits von der Tomate her Gase oder Flüssigkeiten abgegeben werden, die das Gericht in seiner Qualität schon nach kurzer Zeit beeinträchtigen und gegebenenfalls ungenießbar machen.

Die vorangehend geschilderten Probleme werden durch die vorliegende Erfindung, so wie durch die Patentansprüche definiert worden ist, gelöst. Im Prinzip geht man gemäß der Erfindung so vor, daß eine Tomate zusammen mit anderen Zutaten aufbereitet und in die Form einer Wurst gebracht wird. In diesem Zustand kann die Zubereitung aufbewahrt werden, da Zersetzungen nicht zu befürchten sind. Durch Verwendung eines geeigneten Stabilisators kann die Zubereitung in eine Konsistenz gebracht werden, daß sie wie eine Wurst mit Hilfe eines Messers oder einer Schneidmaschine in Scheiben geschnitten werden kann. Insgesamt bleibt die Konsistenz einer Tomate erhalten, wobei das Aussehen der Zubereitung auch Ähnlichkeit mit dem einer Tomate hat, weil beispielsweise die Kerne der Tomate im Endprodukt unverändert vorhanden sind.

Im Zusammenhang mit der Erfindung ist der verwendete Stabilisator von besonderer Bedeutung. In Frage kommen solche Stabilisatoren aus Gemischen, die aus Sulfaten und Estern von Polysaccharidkomplexen aus D-Galaktopyranose, L-Galaktose-Einheiten, nichtreduzierenden Zuckern und dergleichen bestehen.

Ein besonderer Vertreter dieser Gruppe ist Carrageen und im Zusammenhang mit der Erfindung wird bevorzugterweise das Carrageen der Kappa-Fraktionierungsstufe eingesetzt.

Nachfolgend wird das Verfahren gemäß der Erfindung erläutert.

In der ersten Verfahrensstufe wird eine trockene Vormischung aus Zucker und einem bestimmten Stabilisator erzeugt. Sodann wird diese trockene Vormischung in Wasser gebracht und emulgiert. Hierzu bedarf es etwa 60 Sekunden, bei der Temperatur handelt es sich um Raumtemperatur. Anschließend wird diese Emulsion auf 55°C erhitzt, und ein hygroskopisches Mittel wird zugetan. In Frage kommen hierzu beispielsweise Bentonite, Aluminiumsilikate oder aber auch getrocknete Zwiebeln, die den gleichen Zweck erfüllen, nämlich das in der Mischung vorhandene Wasser zu binden. Gleichzeitig wird Tomatenextrakt oder Tomatenmark und Aromastoffe zugegeben und eine Suspension gebildet, die auf 85°C erhitzt wird, um einerseits eine bessere und gleichmäßigere Verteilung der einzelnen Stoffe zu erzielen und andererseits die Viskosität zu erniedrigen. Bei konstanter Temperatur von 85°C werden zerkleinerte und geschälte Tomaten zugegeben, wobei bei dieser Temperatur die zyklischen Anteile der Tomaten umgewandelt und andererseits Oxydationsvorgänge ausgeschlossen werden. Schließlich wird der Suspension noch Essigsäure oder Essig in einer Wasserlösung zugegeben, um den pH-Wert der Mischung insgesamt auf 3,75 einzustellen. Obgleich Essig zugegeben wird, soll der an sich saure Geschmack der Zubereitung insgesamt nicht verstärkt werden, da der pH-Wert lediglich auf den bereits erwähnten Wert gebracht werden soll.

Gemäß der Erfindung können die vorangehend geschilderten Stufen in einer Zerkleinerungsmaschine (Cutter) durchgeführt werden und das auf 75°C gehaltene Gemisch kann mit Hilfe einer Wurstmaschine in eine Wursthülle abgefüllt werden. Das entstandene Produkt hat eine solche Konsistenz, die der einer Tomate verhältnismäßig nahekommt. Mit anderen Worten kann das abgefüllte Produkt bequem mit einem Messer in Scheiben geschnitten werden.

Nachfolgend wird noch eine Zusammensetzung einer typischen Zubereitung aufgegeben, die als Beispiel dienen möge.

| Tomaten | 40 |
|---|---|
| Tomatenmark | 5 |
| Trockenzwiebeln | 3,5 |
| Kappa-Carrageen | 0,5 |
| Zucker | 2,5 |
| Essig 10%-ig | 2,5 |
| Aromastoffe | 0,5 |
| Wasser | 45,5 |
| | 100,00 |

pH 3,75

0121746

Patentansprüche

1. Verfahren zur Herstellung einer schnittfesten Nahrungsmittelzubereitung aus Tomaten, wobei zerkleinerte Tomaten unter Zugabe von Wasser und Zucker, eines Stabilisators, weiterer Zutaten und eines Säurungsmittels gemischt werden, um den pH-Wert einzustellen, dadurch gekennzeichnet, daß einer Vormischung aus Wasser, Zucker und des Stabilisators ein hygroskopisches Mittel zugegeben und eine Suspension gebildet wird, und daß der Suspension bei einer konstanten Temperatur von 85°C die zerkleinerten Tomaten und das Säurungsmittel zugegeben wird.

2. Verfahren zur Herstellung nach Anspruch 1, dadurch gekennzeichnet, daß als hygroskopisches Mittel Trockenzwiebeln eingesetzt werden.

3. Verfahren nach einem der Ansprüche 1 oder 2, dadurch gekennzeichnet, daß die Zubereitung mittels einer Wurstmaschine in eine Wursthülle abgefüllt wird.